# EUROPÄISCHE PATENTANMELDUNG

(11) **EP 1 433 753 A1**
(43) Veröffentlichungstag der Anmeldung: **30.06.2004**
(21) Anmeldenummer: 03090447.8
(22) Anmeldetag: 19.12.2003
(51) Int. Cl.: C02F 1/28

(54) **Verwendung von nachwachsenden Rohstoffen zur Dekontamination von mit ökologisch relevanten Arzneimitteln belasteten Wässern**

(30) Priorität: 20.12.2002 DE 10261841
(71) Anmelder: ATC Dr. Mann e.K., 74847 Obrigheim (DE); Merck Patent GmbH, 64293 Darmstadt (DE)
(72) Erfinder: Mann, Günther, Dr., 74847 Obrigheim (DE); Ross, Erwin-Georg, Dr., 64342 Seeheim-Jugenheim (DE); Gutterer, Jan Mirko, Dr., 74847 Obrigheim (DE); Härtner, Harmut, Dr., 64367 Mühltal (DE); Bräuchle, Vera, 74855 Hassmersheim-Hochhausen (DE); Saunus, Jochen, 74072 Heilbronn (DE)
(74) Vertreter: Rasch, Dorit

(57) **Zusammenfassung**

Die Erfindung betrifft die Verwendung von nachwachsenden Rohstoffen, wie z. B. von Getreide-Mahlrückständen, zur Dekontamination von mit ökologisch relevanten Arzneimittelwirkstoffen belasteten Wässern, wobei die Stoffe unbehandelt oder ggf. nach Modifizierung als Adsorptionsmaterial fungieren.

## Beschreibung

Die Erfindung betrifft die Verwendung von nachwachsenden Rohstoffen (Bioadsorbentien) zur Dekontamination von ökologisch relevanten Arzneimitteln aus belasteten Wässern, wobei die Bioadsorber unbehandelt oder ggf. nach Modifizierung als Adsorptionsmaterial fungieren.

Substanzen, die zur medizinischen Versorgung eingesetzt werden, weisen aufgrund des ausgedehnten Gesundheitswesens beträchtliche Anwendungsmengen auf. Die verordneten Pharmaka gelangen in der Regel über die natürlichen Ausscheidungswege wie Urin oder Faeces in das Abwassersystem und können nach Passage der Kläranlagen die Oberflächengewässer erreichen.

Bisherige Messungen an Abwasser-, Oberflächenwasser- und Grundwasserproben weisen darauf hin, dass Abwässer Haupteintragspfad z.B. für Antibiotika-Wirkstoffe in die Gewässer sind. Diese Beobachtung spricht eher für die Herkunft dieser Rückstände aus der humanmedizinischen Anwendung inklusive der Entsorgung von Medikamentenresten über das Abwasser als für die Herkunft aus dem Veterinärbereich. Eine eindeutige Unterscheidung ist jedoch kaum möglich, da viele Wirkstoffe sowohl in der Human- als auch in der Veterinärmedizin zum Einsatz kommen.

Auch andere Arzneimittelwirkstoffe, die als biologisch aktive Verbindungen große Relevanz besitzen, jedoch aufgrund ihrer Persistenz, begründet durch ihre schlechte Abbaubarkeit, von hohem Umweltgefährdungspotential sind, sind zahlreich bekannt. Die Bedeutung von in der Umwelt nachgewiesenen Arzneimittelrückständen wird seit etwa 10 Jahren in Fachkreisen diskutiert.

In den letzten Jahren konnten in zahlreichen Oberflächen-, Grund-, und Trinkwasserproben Rückstände von Arzneimittelwirkstoffen nachgewiesen werden. Es stellt sich zwangsläufig die Frage nach einer möglichen Umweltrelevanz für diese bestimmungsgemäß biologisch hoch aktiven Stoffe. So wurde z.B. vom Landesumweltamt Brandenburg für 58 Arzneimittelwirkstoffe und zwei Metaboliten eine erste Risikobewertung auf der Grundlage des EMEA-Papiers zur Abschätzung des Umweltrisikos für Humanarzneimittel für das aquatische Ökosystem durchgeführt (Ökologische Bewertung von Humanarzneimitteln in aquatischen Ökosystemen, Studien und Tagungsberichte, Bd. 39, 2002).

Durch Vergleich von PEC-BRB (Predicted Environmental Concentration) für Brandenburger Oberflächengewässer und PNEC (Predicted No Effect Concentration) (Quotient PEC-BRB/PNEC ∼1 oder >1) wurde für folgende Arzneimittelwirkstoffe ein Umweltrisiko für brandenburgische Oberflächengewässer festgestellt: das Sexualhormon Ethinylestradiol, die Antibiotika Ciprofloxacin-HCl und Clarithromycin, das Antidiabetikum Metformin-HCl, die Desinfektionsmittelwirkstoffe Cocospropylendiaminguaniacetat, Glucoprotamin, Laurylpropylendiamin, Dodecylbispropylentriamin, Polyvidon-Iod und Benzalkoniumchlorid sowie für den Lipidsenkermetaboliten Clofibrinsäure. Zahlreiche weitere Substanzen werden als problematisch für die aquatische Umwelt eingestuft.

Es können sich demzufolge adverse und negative Wirkungen auf Nichtzielorganismen im aquatischen Ökosystem ergeben, deren Tendenz aus Laborversuchen bereits erkennbar, aber deren Ökotoxizität im Moment noch nicht genau abzuschätzen ist.

In einer Kläranlage sind viele dieser Stoffe nicht oder nur sehr schlecht abbaubar, wie z. B. in 1999 Messungen im Zuund Ablauf und im Klärschlamm des Klärwerksverbunds Köhlbrandhöft/Dradenau zeigen konnten, der von 90% des Hamburger Abwassers passiert wird (400.000m³/d) . In vielen Ländern werden in Form von Entwicklungsprogrammen Untersuchungen zu endokrin wirksamen Stoffen und Arzneimitteln durchgeführt.

Ökologisch relevante Arzneimittelwirkstoffe, welche für einen vernachlässigbaren bzw. unbedeutenden Humanmetabolismus bekannt sind, das heißt, Stoffe, die eine nahezu unveränderte Wirkstoffausscheidung von > 70% bzw. eine unvollständige Kläranlageneliminierung (< 30%) aufweisen, sind dabei von besonderem Interesse. Eine Vielzahl an Pharmaka sind aufgrund vorliegender Expositionsergebnisse vermutlich als ubiquitär verbreitete Umweltchemikalien einzustufen.

Zur Dekontamination von mit Schadstoffen belasteten Abwässern oder Prozesswässern sind zwar eine Reihe von physikalischen, chemischen und biologischen Methoden und Verfahren beschrieben, offensichtlich existiert aber bisher keine optimale technische Lösung für die Eliminierung dieser unvollständig abgebauten Arzneiwirkstoffe aus Abwässern oder auch aus technischen Prozesswässern der chemischen und pharmazeutischen Industrie. In den meisten Fällen werden zur Verfahrensführung zusätzlich noch Kohlenstoff- und Energiequellen benötigt, so dass die Verfahrenskosten erheblich erhöht werden.

Insgesamt wird von der Fachwelt angenommen, dass vor allem Klärwerksbetreiber zukünftig mit Problemen konfrontiert werden, da erstens die Wirkstoffe mit bislang gängigen Reinigungsmethoden unzureichend oder gar nicht zu eliminieren sind und zweitens durch eine Hemmung der Belebtschlammorganismen durch einzelne Wirkstoffe die Kläranlagenbiologie selbst zerstört wird, was weitreichende Folgen für die Qualität des abgereinigten Wassers haben wird.

Lange bekannt sind adsorptive Methoden und Einschlussverfahren zur Eliminierung von Substanzen aus Abwässern. Adsorptionsverfahren stellen die bevorzugten technischen Lösungen dar. Ein Nachteil adsorptiver Dekontaminationsverfahren besteht jedoch darin, dass die verwendeten Adsorbermaterialien in der Regel teuer sind und auch deren nachträgliche Entsorgung bzw. Endlagerung Probleme bereitet.

Insgesamt ist festzustellen, dass die gegenwärtig angewandten Verfahren zur Dekontamination von mit Arzneistoffen belasteten Abwässern bzw. Deponiesickerwässern sowie ggf. Prozesswässern der chemischen und pharmazeutischen Industrie erhebliche Nachteile besitzen. An geeigneten und preiswerten Entsorgungsverfahren besteht deshalb ein beträchtlicher Bedarf.

Nachweislich reichen die üblichen Abwassertechnologien nicht aus, um die Arzneistoffe aus dem Abwasser zu entfernen. Deshalb müssen bestehende Testsysteme modifiziert oder neu entwickelt werden, um die Besonderheiten der Arzneimittelwirkstoffe zu berücksichtigen.

Die Aufgabe der vorliegenden Erfindung bestand deshalb darin, nach leicht zugänglichen und preiswerten Materialien zu suchen, die die Dekontamination von mit ökologisch relevanten Arzneimittelwirkstoffen belasteten wässrigen Lösungen und/oder Abwässern ermöglichen.

Überraschend wurde gefunden, dass mit ökologisch relevanten Arzneimittelwirkstoffen belastete Abwässer und sonstige wässrige Lösungen von diesen befreit werden können, wenn diese Abwässer und wässrigen Lösungen mit Adsorbermaterialien auf der Basis natürlicher, nachwachsender Rohstoffe in Kontakt gebracht werden, welche die Arzneimittelwirkstoffe mit einem unerwartet hohen Anteil (> 85%, bevorzugt > 90% bzw. sogar > 95%) binden.

Die Adsorbermaterialien auf der Basis natürlicher nachwachsender Rohstoffe (Bioadsorber) stammen aus billigen und leicht zugänglichen Rohstoffquellen, z. B. der Landund Forstwirtschaft oder der mikrobiellen Industrie. Diese sind allgemein biologisch abbaubar. In Biotechnol. Prog. 1995, 11, 235-250 sind eine Vielzahl solcher Bioad-sorber beschrieben. Biosorbentien auf der Basis nachwachsender Rohstoffe sind im wesentlichen cellulose-, lignocelluloseund chitinhaltige Roh- und Reststoffe der Land-, Forst,-Papier-, Nahrungsmittel- und Fischwirtschaft oder deren Bestandteile, vorzugsweise Rohstoffe auf der Basis von Cellulosen, Hemicellulose, Stärke, Pektine, Xylane, Agarose, Dextrane, Lignine, Huminsäuren, Chitin, Chitosan oder Co-Makromoleküle der Substanzen.

Die niedrige Bindungskapazität vieler Bioadsorber kann durch deren chemische Modifizierung erhöht werden. Diese Maßnahmen sind dem Fachmann bekannt. So werden z. B. durch Phosphorylierung von Roh- und Reststoffen aus der Land- und Forstwirtschaft oder der mikrobiellen Industrie Ionenaustauscher mit verbesserten Bindungseigenschaften gewonnen. Nach DE 196 03 786 A1 werden z. B. Ionenaustauscher durch Phosphorylierung von Biomasse von Mikroorganismen der Gattungen Aspergillus, Penicillium, Trichoderma oder Mikrokokkus hergestellt. Auch polysaccharidhaltige Rohstoffe der Land- und Forstwirtschaft lassen sich in Ionenaustauscher überführen. Durch Phosphorylierung mit unterschiedlichen Phosphorylierungsmitteln werden z. B. Bioadsorber aus Zellulose, Lignocellulose, Holzspänen, Sägemehl, Papierbrei und Stärke gewonnen. Bevorzugt werden für das erfindungsgemäße Verfahren phosphorylierter Maisspindelgrieß (MLP) oder Rückstände auf Cellulosebasis (TCP) verwendet.

Adsorbermaterialien auf der Basis natürlicher Rohstoffe im Sinne der Erfindung sind unter anderem auch Biomaterialien, die aus der Mahlung von Getreidekörnern stammen, im folgenden Getreide-Mahlrückstände genannt. Diese fallen in großen Mengen bei der Mehlherstellung aus Getreidekörnern an. Sie sind durch einen hohen Anteil an Kohlenhydraten sowie einem Stickstoffgehalt von etwa 1 bis 3%, einem Phosphorgehalt von unter 2% und einem Schwefelgehalt von unter 0,2% gekennzeichnet, weswegen sie als sehr billiger Rohstoff gegenwärtig insbesondere als Futtermittel eingesetzt werden.

Phosphorylierte Modifikationen dieser Getreide- und Mahlrückstände sind als Biosorbentien aus DE 197 18 452 C2 bekannt und können im Sinne der vorliegenden Erfindung ebenfalls eingesetzt werden.

Erfindungsgemäß können Getreide-Mahlrückstände aller Getreidearten, z.B. von Weizen, Roggen, Gerste, Hafer, Triticale, Hirse, Mais und Reis ggf. auch nach Modifizierung (vorzugsweise phosphoryliert) verwendet werden. Bevorzugt kommen auch Sorbentien ohne jegliche Modifizierung zum Einsatz. Ihre Anwendung kann sowohl als Chromatographiematerial in Säulen, aber auch als Adsorber im Batch-Verfahren erfolgen.

Erfindungsgemäß werden die modifizierten oder unmodifizierten Bioadsorbentien bevorzugt als Suspension in wässrigen Systemen und/oder organischen Lösungsmitteln, in welchen sie als unlösliche Partikel vorliegen, verwendet. Adsorptionsverfahren sind in der Regel die technisch anspruchslosesten Verfahren zur Eliminierung von Schadstoffen aus wässrigen Lösungen oder Abwässern. Ihr Geräte- und Energieaufwand ist vergleichsweise gering z. B. im Vergleich zu mikrobiologischen oder elektrochemischen Verfahren.

Die Bioadsorbentien, bevorzugt Getreide-Mahlrückstände, finden zur Dekontamination von mit ökologisch relevanten Arzneimittelwirkstoffen belasteten Wässern vielfach Anwendung, so z.B. im Umweltbereich bei der Aufreinigung von Wässern aus Kläranlagen und Deponiesickerwässern, in der chemischen Industrie bei Herstellern und Exherstellern von Arzneimitteln zur Reinigung von deren häufig belasteten Abwässern und Prozesswässern und zur Reinigung von Grundwasser oder Oberflächenwasser für die Trinkwassergewinnung in durch Arzneimittelwirkstoffe belasteten Gebieten.

Ökologisch relevante Arzneimittelwirkstoffe im Sinne der Erfindung können alle sein, die einen vernachlässigbaren Humanmetabolismus, wie oben bereits ausgeführt, aufweisen.

Sie können in allen an sich bekannten Indikations- und Stoffgruppen vorkommen. Stellvertretend seien hier folgende Wirkstoffe und -gruppen genannt:

Aus der Gruppe der Alpha- und Betarezeptorenblocker:
z.B. Acebutolol, Atenolol, Betaxolol, Bisoprolol, Metoprolol, Nadolol, Propanolol, Talinolol, Carazoloe, Timolol,
Aus der Gruppe der Anabolika:
z.B. Androstanolon, Nandrolon.

Aus der Gruppe der Analgetika/Antiphlogistika/Antipyretika:
z.B. Aceclofenac, Buprenorphin, Celecoxib, Diclofenac, Metamizol, Metamizol-Na, Paracetamol, Ibuprofen, Indometazin, Naprosen, Ketoprofen,
Aus der Gruppe der Antibiotika:
z.B. Ciprofloxacin Ciprofloxacin-HCl, Penicilline, Ammonglykoside, wie Gentamycin, Neomycin, Tetracycline, wie Doxicyclin, Tetracyclin, Cephalosporine; Roxithomycin, Sulfamethoxazol, Trimethoprim, Oflaxacin, Amoxicillin, Erythromycin.
Aus der Gruppe der Antidiabetika:
z.B. Arcabose, Metformin, Metformin-HCl, Nateglinid.
Aus der Gruppe der Antiepileptika:
z.B. Carbamazepin, Diazepam, Phenobarbial.
Aus der Gruppe der Dermatika:
z.B. Dimeticon.
Aus der Gruppe der Desinfizientia/Antiseptika:
z.B. Formaldehyd und -Derivate, Phenole und -Derivate, Phenoxy-Propanol-Isomere.
Aus der Gruppe der Diuretika:
z.B. Amilorid, Ethacrynsäure, Furosemid, Hydrochlorothiazid, Piretanid.
Aus der Gruppe der Durchblutungsfördernden Mittel:
z.B. Buflomedil, Naftidrofurylhydrogenoxalat.
Aus der Gruppe der Rheumatika:
z.B. Chloroquin, Hyaluronsäure, Methotrexat, Leflunomid.
Aus der Gruppe der Röntgenkontrastmittel:
z.B. Iodixanol, Iotrolan.
Aus der Gruppe der Steroide:
z.B. Corticosteroide, Cortison, Steroidhormone, Digitalisglycoside, Steroidalkaloide.
Aus der Gruppe der Zytostatika:
z.B. 5-Fluoruracil, Cyclophosphamid, Chlorambucil, Melphalan, Cisplatin, Taxol, Vincristin.
Aus der Gruppe der Zytokine und Immunmodulatoren:
z.B. Methotrexat.

Von besonderer Relevanz sind Substanzen, die einen unbedeutenden Humanmetabolismus besitzen (> 70%) und deren Kläranlageneliminierung gleichzeitig unvollständig (< 30%) ist. Dazu gehören z.B. Biguanide oder Amine, wie z.B. Metformin-HCl, Beta-Blocker, wie z.B. Bisopropol, Antibiotika auf der Basis von Chinolonen und Aminoglykosiden, wie z.B. Gentamycin und Ciprofloxacin-HCl oder Röntgenkontrastmittel, wie z.B. Iodixanol.

In einer bevorzugten Ausführungsvariante der Erfindung werden die Adsorbermaterialen vor ihrer Anwendung mit Wasser vorbehandelt und aufgequollen. Sie werden durch Waschen mit Wasser von störenden Bestandteilen wie z. B. Mehlbestandteilen befreit und vorzugsweise in deionisiertem Wasser gelagert, bis sie möglichst vollständig gequollen sind. Je nach Art der Bioadsorber werden sie vorzugsweise zwei bis zwanzig Stunden in dem deionisierten Wasser gelagert.

Abwässer aus Kläranlagen, Industrieabwässer und Deponiesickerwässer enthalten oft Feststoffpartikel und schlecht abfilterbare Schwebstoffe. Ihre Gegenwart ist ggf. von großem Nachteil, weil diese Stoffe (anorganischer oder organischer Natur) das erfindungsgemäße Chromatographie-Verfahren durch Verstopfung oder Verringerung der Durchflussgeschwindigkeit bei großen Durchflussvolumina erheblich behindern oder sogar vollständig verhindern können.

In einer weiteren Ausführungsvariante der Erfindung werden die ökologisch relevante Arzneimittelwirkstoffe enthaltenden Abwässer deshalb vorbehandelt, um diese Feststoffe zu entfernen. Die Befreiung von mit schwer filtrierbaren Feststoffen der Wässer erfolgt bevorzugt durch Flotation, im speziellen Fall der Reinigung von Abwässern bevorzugt durch Elektroflotation. Die Flotation und insbesondere die Elektroflotation ist sehr vorteilhaft, weil mit diesem Schritt das Verfahren der Dekontamination von belasteten Abwässern in billiger und einfacher Weise kontinuierlich gestaltet werden kann.

Die durch Elektroflotation vorbehandelten Abwässer können anschließend kontinuierlich aus dem Vorratsbehälter der Elektroflotation direkt über eine Chromatographiesäule mit den darin befindlichen Bioadsorbentien geleitet werden. Eine weitere Behandlung bzw. Konditionierung der die ökologisch relevanten Arzneimittelwirkstoffe enthaltenden Wässer ist nicht mehr notwendig.

Die in wässrigen Systemen und/oder organischen Lösungsmitteln unlöslichen und darin als sphärische Partikel vorliegenden Bioadsorbentien sind in der Lage, die Stoffe sowohl aus wässrigen Lösungen als auch aus von Feststoffbestandteilen befreiten Abwässern oder Deponiesickerwässern zu binden. Es werden überraschend von den Arzneimittelwirkstoffen befreite Abwässer und wässrige Lösungen mit abgabefähigen Grenzwerten erhalten.

Sowohl beim Chromatographieverfahren als auch beim diskontinuierlichen Batch-Verfahren - im letzteren Fall nach Abtrennung der beladenen Adsorbermaterialien - werden Eluate erhalten, deren Schadstoff-Konzentrationen erheblich unter den Ursprungsgrößen liegen.

Besonders bevorzugte Adsorbermaterilien sind: Getreide-Mahlrückstände, wie z. B. unbehandelte oder schwach phosphorylierte Weizenkleie (KLX), phosphorylierte Weizenkleie (KLP), weiterhin phosphorylierter Maisspindelgrieß (MLP) und Rückstände auf Cellulosebasis (TCP).

Der Einsatz des erfindungsgemäßen Adsorbermaterials hat verschiedene Vorteile:
- Es können häufig schwer verwertbare Abfallprodukte von leicht zugänglichen nachwachsenden Rohstoffen als Adsorptionsmaterial eingesetzt werden, denn Land- und Forstwirtschaft und Getreidemühlen können die Bioadsorbermaterialien in unbegrenzten Mengen zur Verfügung stellen.
- Die Adsoptionsmaterialien sind wesentlich billiger als jegliche am Markt zugänglichen Adsorber.
- Die Adsorber, wie z.B. die Getreide-Mahlrückstände, müssen ggf. lediglich mit Wasser gereinigt werden. Sie müssen für die Anwendung in einer Ausführungsvariante weder aktiviert noch chemisch modifiziert werden.
- Verbrauchte Materialien lassen sich problemlos durch Verbrennung bei niedrigen Temperaturen oder durch Kompostierung entsorgen. Bei ihrer Verbrennung bleiben nur sehr geringe Mengen Ascherückstände zurück. Die Verbrennung erfordert keine Zugabe zusätzlicher, die Verbrennung fördernde Materialien. Der Verbrennungsprozess ist CO₂-neutral. Als Hauptverbrennungsprodukt wird nur so viel Kohlendioxid gebildet, wie auch für die biologische Synthese verbraucht wird.
- Es können die gesetzlichen Grenz- und Einleitwerte für ökologisch relevante Arzneimittelwirkstoffe mit überraschend einfachen Mitteln und unkompliziert mit einem Verfahrensschritt erreicht werden.

In einer bevorzugten Ausführungsvariante der Erfindung können überraschend die besonders bedenklichen Substanzen Metformin (Metformin-HCl), Ciprofloxacin (Ciprofloxacin-HCl), sowie auch Bisoprolol und Gentamycin mit hohen Konzentrationen (> 85%, vorzugsweise > 95%) entfernt werden. Sie liegen dann damit bei Werten, mit denen sie nach derzeitigen Erkenntnissen unbedenklich in die Umwelt entlassen werden können. Für die besonders relevanten Substanzen Metformin-HCl, Ciprofloxacin-HCl, Bisoprolol und Gentamycin werden z.B. überraschend bereits vor einem zweiten Säulenlauf Abgabewerte für Vorfluter erreicht, die als unbedenklich gelten.

Mit dem erfindungsgemäßen Verfahren ist eine deutliche Abreinigung der im Prozesswasser vorkommenden Arzneimittelwirkstoffe zu erzielen.

Das erfindungsgemäße Verfahren ist deshalb auch für die Abreinigung von weiteren Therapeutika auf der Basis von Biguaniden bzw. Aminen, von weiteren Antibiotika auf der Basis von Chinolonen und Aminoglykosiden sowie von weiteren Beta-Blockern ähnlicher Molekülstruktur wie Bisoprolol hervorragend geeignet.

Anschließend soll die Erfindung an Ausführungsbeispielen näher erläutert werden ohne dass sie darauf beschränkt werden soll.

### Beispiel 1

### Abreinigung von mit Metformin verunreinigten Lösungen

Die Entfernung des Metformins aus einem Modellwasser wurde mittels Chromatographie im Batch-Verfahren mit phosphorylierter Weizenkleie als Bioadsorber gemäß DE 197 18 452 C2 (Bioadsorber Modell KLP) durchgeführt.

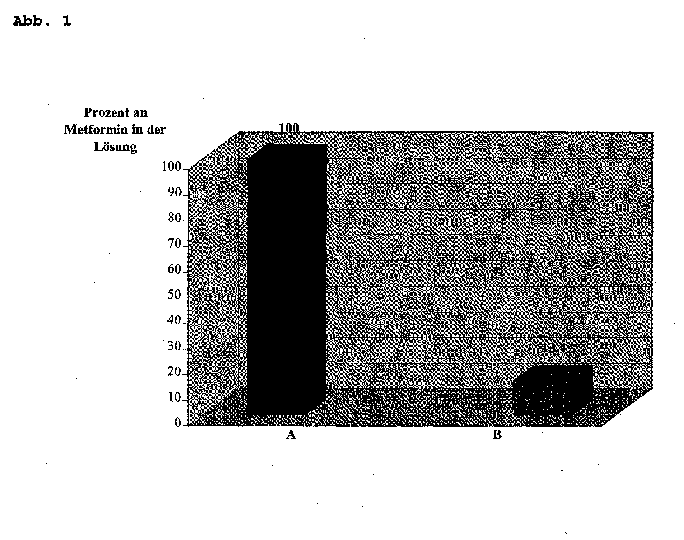

Die Ergebnisse sind in Abb. 1 gezeigt und im nachfolgenden Text beschrieben und erläutert.

### Vorbereitung einer Metformin- Modelllösung

Es wurde eine Metformin- Lösung mit einer Endkonzentration von 1 g/l in H₂O_{dd} hergestellt . Das Metformin -Pulver wurde von der Fa. MERCK KGaA Darmstadt gestellt.

### Chromatographie im Batch- Verfahren

Die Chromatographie im Batch- Verfahren wurde bei Raumtemperatur durchgeführt. Der Bioadsorber KLP mit einem Trockengewicht von 1 g wurde in Wasser ausgequollen und ergab 5 ml gequollenen Bioadsorber. Die Kontaktzeit des Adsorbers mit der Metformin- Modellösung betrug 20 h. Das Chromatographiematerial war gut in Stabilität und Handling. Alle Proben wurden nach Beendigung der Chromatographie sofort auf Metformin untersucht und anschließend bei 4 °C gelagert.

**Tabelle:**

| Ansätze | |
|---|---|
| Ansatz 1 | Ansatz 2 |
| *Reine Metformin Modelllösung Kontrolle; (A)* | *Metformin Modelllösung mit KLP behandelt (B)* |
| Reine Metformin Modellösung (1g/l) | KLP (lg Trockensubstanz) + Metformin Modellösung (1g/l) |

### Analytik

Die Proben wurden nach Behandlung auf primäre Aminogruppen untersucht. Mittels modifiziertem Ammoniumtest wurden Ammonium - Ionen und primäre Amine detektiert. Eichgeraden
- adaptiert auf die entsprechenden Konzentrationen an Metformin - wurden angelegt. Anschließend wurde - nach photometrischer Detektion - stöchiometrisch auf die entsprechende Menge an Metformin umgerechnet.
Insofern kann davon ausgegangen werden, dass sich das Ergebnis von mathematischer Seite aus innerhalb der üblichen Fehlertoleranz bzgl. photometrischer Analysemethoden befindet.

Wie der Abb. 1 entnommen werden kann, ist mit der Methode eine deutliche Abreinigung (> 85%) des im Prozesswasser vorkommenden Metformin möglich.

### Beispiel 2

### Abreinigung von mit Ciprofloxacin verunreinigten Lösungen.

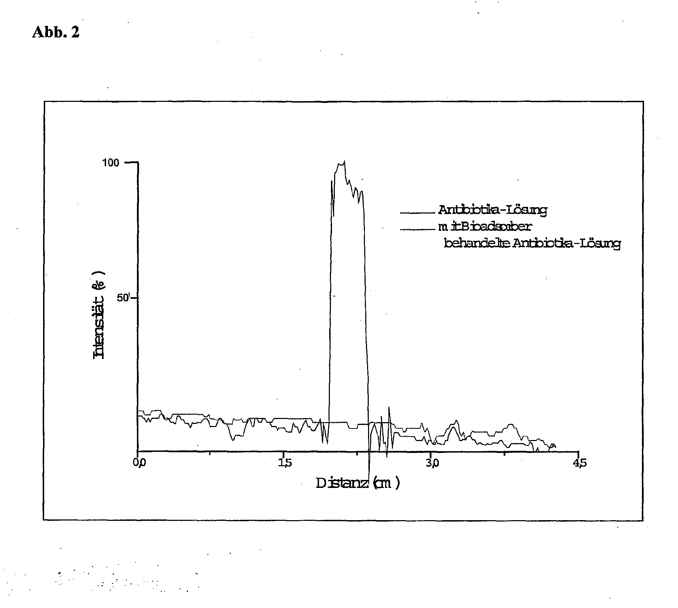

Die Entfernung des Ciprofloxacins wurde wie in Beispiel 1 durchgeführt. Die Ergebnisse sind in Abb. 2 gezeigt und im nachfolgenden Text beschrieben und erläutert.

### Vorbereitung einer Ciprofloxacin- Modelllösung

Es wurde eine Ciprofloxacin- Lösung mit einer Endkonzentration von 5 g/l in H₂O_{dd} hergestellt. Ciprofloxacin wurde von der Fa. Hexal Holzkirchen, DE gestellt.

### Chromatographie im Batch-Verfahren

Die Chromatographie im Batch- Verfahren wurde bei Raumtemperatur durchgeführt. Der Bioadsorber KLP mit einem Trockengewicht von 1 g ergab 5 ml gequollenen Bioadsorber. Die Kontaktzeit des Adsorbers mit der Ciprofloxacin-Modellösung betrug 20 h. Das Chromatographiematerial war gut in Stabilität und Handling. Alle Proben wurden nach Beendigung der Chromatographie sofort auf Ciprofloxacin untersucht und anschließend bei 4°C gelagert.

**Tabelle:**

| Ansätze | |
|---|---|
| Ansatz 1 | Ansatz 2 |
| Reine *Ciprofloxacin Modellösung; Kontrolle (A)* | *Ciprofloxacin Modellösung behandelt KLP und Ciprofloxacin; (B)* |
| Ciprofloxacin (5g/l in Wasser) | KLP (0,5 g)+ Ciprofloxacin (5g/l in Wasser) |

### Analytik

Die Analytik (modifizierte Dünnschichtchromatographie; Prototyp in Eigenentwicklung; Laufmittel: Essigsäure (Fa. *MERCK, Darmstadt, Deutschland)* /Wasser _{dd} 1/1 (v/v)), der Proben wie folgt durchgeführt:
Es wurden die Proben (Überstände der Batch- Ansätze) direkt nach dem Experiment auf speziell präparierte Dünnschichtchromatographie- Platten (DC-Folien, 5 x 10 cm; Kieselgel 60 F ₂₅₄ ; Fa. MERCK, Darmstadt, Deutschland) aufgetragen und separiert. Durch Densitometrie-Analysen aller Spots - nach entsprechender Visualisierung des Ciprofloxacins mittels VIS und UV wurde semiquantitativ der Gehalt an Ciprofloxacin (ausgedrückt in Intensität %) für jede Probe erhalten.

Die densitometrische Analyse der mit dem Bioadsorber KLP behandelten Ciprofloxacin- Modelllösung ist der Abb. 2 zu entnehmen. Unbehandelte Ciprofloxacin- Modelllösung (KURVENVERLAUF MIT PEAK); Ciprofloxacin- Modelllösung mit Bioadsorber KLP behandelt (Kurvenverlauf ohne Peak). Gezeigt werden die Densitometrie-Chromatogramme bis zu einer Distanz von 4,5 cm. Der Peak (Distanz 2 cm) entspricht Ciprofloxacin.

Mit Hilfe des Bioadsorbers KLP konnte Ciprofloxacin aus einer hochkonzentrierten Modelllösung zu beinahe 99 % entfernt werden *(Diagramm - Abb. 2).*

Mit der Methode ist eine deutliche Abreinigung des im Prozesswasser und Abwasser vorkommenden Ciprofloxacin gegeben.

### Beispiel 3

### Abreinigung von mit Bisoprolol-Hemifumarat (im Verlauf Bisoprolol genannt) verunreinigten Lösungen

Die Entfernung des Bisoprolols aus einem Modellwasser wurde mittels Chromatographie im Batch-Verfahren mit phosphorylierter Weizenkleie gemäß DE 197 18 452 C2 in zwei Ansätzen (KLP ADSORBER 1 und ADSORBER 2) durchgeführt.

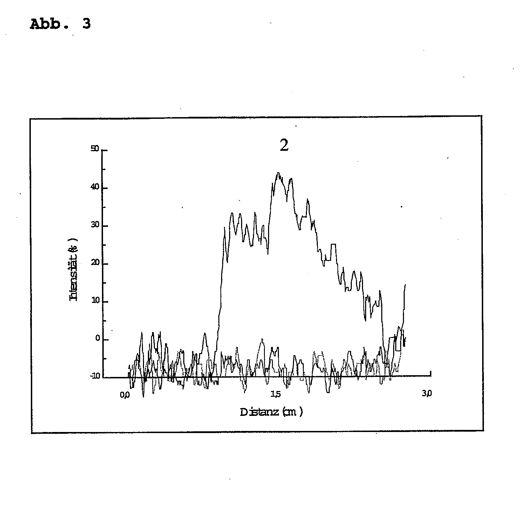

Die Ergebnisse sind in Abb. 3 gezeigt und im nachfolgenden Text beschrieben und erläutert.

### Vorbereitung einer Bisoprolol- Modelllösung

Es wurde eine Bisoprolol- Lösung mit einer Endkonzentration von 20 mg/l in H₂O_{dd} hergestellt. Das Bisoprolol-Pulver wurde von der Fa. MERCK KGaA Darmstadt gestellt.

### Chromatographie im Batch- Verfahren

Die Chromatographie im Batch-Verfahren wurde bei Raumtemperatur durchgeführt. Die Bioadsorber 1 + 2 hatten ein Trockengewicht von 1 g und ergab 6 ml gequollener Bioadsorber. Die Kontaktzeit der Adsorber mit der Bisoprolol Modellösung auf Schüttler betrug jeweils 20 h. Beide Chromatographiematerialien waren gut in Stabilität und Handling. Danach wurde solange gewartet bis sich die Adsorber am Boden abgesetzt hatten (ca. 2 min). Alle Proben (Überstände der Batch Ansätze) wurden nach Beendigung der Chromatographie sofort der Analytik übergeben.

**Tabelle:**

| Ansätze | | |
|---|---|---|
| Ansatz 1 | Ansatz 2 | Ansatz 3 (Reproduktion von 2) |
| *Kontrolle* | *Menex Bioadsorber KLP1 und Bisoprolol* | *Menex Bioadsorber KLP 2 und Bisoprolol* |
| Reine Bisoprolol Modellösung | Bisoprolol Modellösung behandelt mit KLP | Bisoprolol Modellösung behandelt mit KLP |

### Analytik

Zur Analytik (modifizierte Dünnschichtchromatographie; Laufmittel Acetonitril /Essigsäure 4/1 (v/v), (beide Fa. *MERCK, Darmstadt, Deutschland))* wurden die Proben (Überstände der Batch- Ansätze) direkt nach dem Experiment auf speziell präparierte Dünnschichtchromatographie-Platten *(DC- Folien, 5 x 10 cm; Kieselgel 60 F* _{*254*}*; Fa. MERCK, Darmstadt, Deutschland)* aufgetragen und separiert. Durch Densitometrie-Analysen aller Spots - nach entsprechender Visualisierung des Bisoprolols mittels Ninhydrin *(Ninhydrin Reagens nach Stahl; Fa. Fluka, Buchs, Schweiz)* - Inkubation 5 min bei 85°C - wurde semiquantitativ der Gehalt an Bisoprolol (ausgedrückt in Intensität %) für jede Probe erhalten.

Die densitometrische Analyse der mit BIOADSORBER KLP 1 (1) und BIOADSORBER KLP 2 (2) Reproduktionsexperiment) behandelten BISOPROLOL-MODELLLÖSUNG [unbehandelt (3)] ist der Abb. 3 zu entnehmen. Gezeigt werden die Densitometrie-Chromatogramme bis zu einer Distanz von 3 cm. Peak 2 (Linie (3) entspricht Bisoprolol, Peak 1 eine bis dato nicht näher bestimmte Komponente, höchst wahrscheinlich Hemifumarat.

Mit Hilfe beider Bioadsorber ist es unter den gewählten Bedingungen möglich, Bisoprolol aus der Modelllösung zu entfernen *(Chromatogramm 1 - Abb.* 3). Für die Analyse der Proben wurde direkt der Überstand der Ansätze verwendet. Dies zeigt zum einen die immense Potenz der Adsorber bezüglich der Abreinigung von Bisoprolol und andererseits die Sensitivität der entwickelten Analytik.

Mit der vorgestellten Methode ist unter den gewählten Bedingungen eine deutliche Abreinigung des im Prozesswasser vorkommenden Bisoprolols möglich.

### Beispiel 4

### Abreinigung von mit Gentamycin verunreinigten Lösungen

Die Entfernung des Gentamycins aus einem Modellwasser wurde mittels Chromatographie im Batch-Verfahren mit phosphorylierter Weizenkleie in zwei Ansätzen (KLP 1) und unbehandelter Weizenkleie (KLX 2) durchgeführt.

### Vorbereitung einer Gentamycin-Modelllösung

Es wurde eine Gentamycin-Lösung mit einer Endkonzentration von 20 mg/l in H₂O_{dd} hergestellt.

### Chromatographie im Batch- Verfahren

Die Chromatographie im Batch- Verfahren wurde bei Raumtemperatur durchgeführt. Die Bioadsorber KLP und KLX hatten ein Trockengewicht von 1 g und ergaben jeweils 56 ml gequollener Bioadsorber. Die Kontaktzeit der Adsorber mit der Modellösung auf Schüttler betrug jeweils 23 h. Beide Chromatographiematerialien waren gut in Stabilität und Handling. Danach wurde solange gewartet bis sich die Adsorber am Boden abgesetzt hatten (ca. 2 min). Alle Proben (Überstände der Batch Ansätze) wurden nach Beendigung der Chromatographie sofort der Analytik (MS/MS) übergeben.

Mit Hilfe des Bioadsorbers KLP konnte Gentamycin aus einer hochkonzentrierten Modelllösung zu beinahe 96 % und mit Hilfe des Bioadsorbers KLX zu 99 % entfernt werden.

## Patentansprüche

1. Verwendung von nachwachsenden Rohstoffen als Adsorber zur Dekontamination von mit ökologisch relevanten Arzneimittelwirkstoffen belasteten Wässern.

2. Verwendung nach Anspruch 1,
**dadurch gekennzeichnet, dass**
als nachwachsende Rohstoffe modifizierte oder unmodifizierte Bioadsorbentien aus leicht zugänglichen Rohstoffquellen verwendet werden.

3. Verwendung nach Anspruch 1 oder 2,
**dadurch gekennzeichnet, dass**
als nachwachsende Rohstoffe modifizierte oder unmodifizierte Getreide-Mahlrückstände, vorzugsweise aus Weizen, Roggen, Gerste, Hafer, Triticale, Hirse, Mais und Reiskörnern verwendet werden.

4. Verwendung nach Anspruch 3,
**dadurch gekennzeichnet, dass** als Getreide-Mahlrückstände unbehandelte oder schwach phosphorylierte Weizenkleie (KLX) oder phosphorylierte Weizenkleie (KLP) verwendet werden.

5. Verwendung nach Anspruch 1 oder 2,
**dadurch gekennzeichnet, dass**
als nachwachsenden Rohstoffe cellulose-, lignocellulose- und chitinhaltige Roh- und Reststoffe der Land-, Forst,- Papier-, Nahrungsmittel- und Fischwirtschaft oder deren Bestandteile verwendet werden, vorzugsweise Rohstoffe auf der Basis von Cellulosen, Hemicellulose, Stärke, Pektine, Xylane, Agarose, Dextrane, Lignine, Huminsäuren, Chitin, Chitosan oder Co-Makromoleküle der Substanzen.

6. Verwendung nach Anspruch 5,
**dadurch gekennzeichnet, dass**
phosphorylierter Maisspindelgrieß (MLP) oder Rückstände auf Cellulosebasis (TCP) verwendet werden.

7. Verwendung nach einem der Ansprüche 1 bis 6,
**dadurch gekennzeichnet, dass**
die als nachwachsende Rohstoffe verwendeten modifizierten oder unmodifizierten Bioadsorbentien als Suspension in wässrigen Systemen und/oder in organischen Lösungsmitteln eingesetzt werden.

8. Verwendung nach Anspruch 7,
**dadurch gekennzeichnet, dass**
in deionisiertem Wasser ausgequollene Biosorbentien eingesetzt werden.

9. Verwendung nach einem der Ansprüche 1 bis 8,
**dadurch gekennzeichnet, dass**
die Biosorbentien als Adsorber in Säulen eingesetzt werden.

10. Verwendung nach einem der Ansprüche 1 bis 8,
**dadurch gekennzeichnet, dass**
die Biosorbentien als Adsorber im Batch-Verfahren eingesetzt werden.

11. Verwendung nach einem der Ansprüche 1 bis 10,
**dadurch gekennzeichnet, dass**
die Biosorbentien zur Dekontamination von mit Antibiotika auf der Basis von Chinolonen und Aminoglykosiden belasteten Wässern eingesetzt werden.

12. Verwendung nach Anspruch 11,
**dadurch gekennzeichnet, dass**
Getreide-Mahlrückstände zur Dekontamination von mit Gentamycin belasteten Wässern eingesetzt werden.

13. Verwendung nach Anspruch 11,
**dadurch gekennzeichnet, dass**
Getreide-Mahlrückstände zur Dekontamination von mit Ciprofloxacin-HCl belasteten Wässern eingesetzt werden.

14. Verwendung nach einem der Ansprüche 1 bis 10,
**dadurch gekennzeichnet, dass**
die Biosorbentien zur Dekontamination von mit Therapeutika auf der Basis von Biguaniden oder Aminen belasteten Wässern eingesetzt werden.

15. Verwendung nach Anspruch 14,
**dadurch gekennzeichnet, dass**
Getreide-Mahlrückstände zur Dekontamination von mit Metformin-HCl belasteten Wässern verwendet werden.

16. Verwendung nach einem der Ansprüche 1 bis 10,
**dadurch gekennzeichnet, dass**
die Biosorbentien zur Dekontamination von mit Beta-Blockern belasteten Wässern eingesetzt werden.

17. Verwendung nach Anspruch 16,
**dadurch gekennzeichnet, dass**
Getreide-Mahlrückstände zur Dekontamination von mit Bisopropol belasteten Wässern eingesetzt werden.
